# EUROPÄISCHE PATENTSCHRIFT

(11) **EP 4 370 885 B1**
(45) Veröffentlichungstag und Bekanntmachung des Hinweises auf die Patenterteilung: **11.06.2025**
(21) Anmeldenummer: 22738499.7
(22) Anmeldetag: 11.07.2022
(51) Int. Cl.: G01K 1/20, G01K 1/16, B60H 1/00, B60K 35/10, B60K 35/22, B60K 35/28, B60K 35/60

(54) **TEMPERATURMESSEINRICHTUNG, DACHBEDIENVORRICHTUNG SOWIE SYSTEM ZUM BEREITSTELLEN EINES TEMPERATURWERTS FÜR EINE KLIMAANLAGE EINES KRAFTFAHRZEUGS**
TEMPERATURE-MEASURING DEVICE, ROOF-MOUNTED CONTROLLER, AND SYSTEM FOR PROVIDING A TEMPERATURE VALUE FOR AN AIR-CONDITIONING INSTALLATION OF A MOTOR VEHICLE
DISPOSITIF DE MESURE DE TEMPÉRATURE, DISPOSITIF DE COMMANDE MONTÉ SUR LE TOIT, ET SYSTÈME DE FOURNITURE DE VALEUR DE TEMPÉRATURE POUR L'INSTALLATION DE CLIMATISATION D'UN VÉHICULE AUTOMOBILE

(30) Priorität: 12.07.2021 DE 102021117871
(43) Veröffentlichungstag der Anmeldung: 22.05.2024
(73) Patentinhaber: Valeo Schalter und Sensoren GmbH, 74321 Bietigheim-Bissingen (DE)
(72) Erfinder: TREBES, Martin, 96476 Bad Rodach (DE); HAEBLER, Peter, 96476 Bad Rodach (DE); TOURADE, Mathieu, 96476 Bad Rodach (DE); FINDEISEN, Thomas, 96476 Bad Rodach (DE)
(74) Vertreter: Ralf, Thorge
(86) Internationale Anmeldenummer: PCT/EP2022/069211
(87) Internationale Veröffentlichungsnummer: WO 2023/285330

(56) Entgegenhaltungen:
- DE-A1- 102004 009 605
- DE-A1- 102012 105 534
- DE-A1- 102018 132 103
- DE-B3- 102005 002 363
- DE-B4- 10 302 285
- US-B2- 6 997 605

## Beschreibung

Die Erfindung betrifft eine Temperaturmesseinrichtung für eine Klimaanlage eines Kraftfahrzeugs. Des Weiteren betrifft die Erfindung eine Dachbedienvorrichtung für ein Kraftfahrzeug, die eine derartige Temperaturmesseinrichtung aufweist. Ferner betrifft die Erfindung ein System zum Bereitstellen eines Temperaturwerts für eine Klimaanlage eines Kraftfahrzeugs, das eine derartige Dachbedienvorrichtung sowie die Klimaanlage des Kraftfahrzeugs aufweist.

Ein Kraftfahrzeug weist oft eine Temperaturmesseinrichtung zum Messen einer Innenraumtemperatur im Kraftfahrzeug auf. Basierend auf einem mittels der Temperaturmesseinrichtung gemessenen Temperaturwert kann beispielweise eine Klimaanlage im Kraftfahrzeug eingestellt und gesteuert werden. Die Temperaturmesseinrichtung im Kraftfahrzeug weist typischerweise eine Fotodiode auf, mittels derer beispielweise festgestellt werden kann, ob die Temperaturmesseinrichtung einer Sonneneinstrahlung ausgesetzt ist. Falls dies der Fall ist und beispielweise Sonneneinstrahlung direkt durch eine Scheibe des Kraftfahrzeugs auf den Temperatursensor oder eine Komponente des Temperatursensors trifft, kann dies den gemessenen Temperaturwert beeinflussen, sodass beispielsweise eine höhere Temperatur als die tatsächliche Innenraumtemperatur des Kraftfahrzeugs gemessen wird.

Die EP 1 894 757 A1 zeigt eine Temperaturmesseinrichtung für einen Innenraum eines Kraftfahrzeugs, die auf einem Armaturenbrett des Kraftfahrzeugs positioniert und dort einer Sonneneinstrahlung durch eine Windschutzscheibe des Kraftfahrzeugs ausgesetzt ist. Die Temperaturmesseinrichtung weist eine starre Leiterplatte mit zumindest zwei Temperatursensoren auf, wobei die Leiterplatte hinter einer aus dem Armaturenbrett herausragenden Kappe angeordnet ist. Durch ein Auswerten der von den beiden Temperatursensoren bereitgestellten Temperaturmessdaten kann letztendlich die Innenraumtemperatur des Kraftfahrzeugs bestimmt werden.

Die DE 10 2007 015 231 A1 zeigt eine Vorrichtung zum Ermitteln einer Raumtemperatur in einem Fahrzeuginnenraum, wobei die Vorrichtung ein dünnes, flächiges Wärmetauschelement aufweist, das über ein Wärmeleitteil mit einem rückseitigen Temperatursensor gekoppelt ist. Die Vorrichtung weist mindestens zwei thermische isolierte und sich nicht gegenseitig beeinflussende Temperatursensoren auf.

Die US 2018/0058942 A1 zeigt eine Temperaturerfassungseinrichtung für einen Fahrzeuginnenraum, bei dem ein Temperatursensor auf einer starren Leiterplatte angeordnet ist.

Andere Temperaturmesseinrichtungen aus dem Stand der Technik sind beispielsweise aus DE 10 2005 002363 B3, US 6 997 605 B2, DE 10 2004 009605 A1, DE 10 2012 105534 A1, DE 103 02 285 B4, und DE 10 2018 132103 A1 bekannt.

Es ist die Aufgabe der Erfindung eine Lösung bereitzustellen, mittels derer eine kompakte und zuverlässige Temperaturmesseinrichtung für eine Klimaanlage eines Kraftfahrzeugs bereitgestellt werden kann.

Die Aufgabe wird durch den Gegenstand des unabhängigen Anspruchs gelöst.

Ein Aspekt der Erfindung betrifft eine Temperaturmesseinrichtung für eine Klimaanlage eines Kraftfahrzeugs. Die Temperaturmesseinrichtung weist eine thermisch leitfähige Kappe und eine Leiterplatte mit zwei Temperatursensoren auf. Die beiden Temperatursensoren sind zueinander räumlich beabstandet auf der Leiterplatte angeordnet. Die thermisch leitfähige Kappe ist dazu ausgebildet, dass diese in einer bevorzugten Einbaulage der Temperaturmesseinrichtung im Kraftfahrzeug mit zumindest einer Oberfläche der thermisch leitfähigen Kappe einem Innenraum des Kraftfahrzeugs zugewandt ist. Die Temperaturmesseinrichtung als Ganzes ist also derart ausgebildet, dass eine Temperatur im Bereich der zumindest einen Oberfläche der thermisch leitfähigen Kappe mittels der Temperaturmesseinrichtung gemessen und bereitgestellt werden kann. Es kann also die Temperatur gemessen werden, die zu einem aktuellen Zeitpunkt in einer Umgebung der Kappe herrscht und die die Kappe zum aktuellen Zeitpunkt aufweist.

Die zwei räumlich voneinander beabstandeten Temperatursensoren sind an zwei unterschiedlichen Positionen auf der Leiterplatte angeordnet, wobei zwischen den zwei Positionen ein Mindestabstand liegt. Der Mindestabstand ist größer Null und beträgt beispielsweise einen Zentimeter. Alternativ kann der Mindestabstand einen Millimeter, fünf Millimeter, 1,5 Zentimeter, zwei Zentimeter, drei Zentimeter, vier Zentimeter oder fünf Zentimeter, wobei er einen beliebigen Wert zwischen einem Millimeter und fünf Zentimeter betragen kann. Die beiden Temperatursensoren berühren sich nicht. Jeder der beiden Temperatursensoren misst bevorzugt kontinuierlich eine Temperaturinformation, die eine Temperatur am und/oder in einer direkten Umgebung des Temperatursensors beschreibt. Die Temperaturinformation umfasst einen Wert, der die Temperatur beziffert, und/oder Daten, die die Temperatur beziffern. Mittels eines Auswertens der gemessenen Temperaturinformationen kann die Temperatur der Kappe und/oder der Umgebung der Kappe der Temperaturmesseinrichtung bestimmt werden und als Temperaturwert bereitgestellt werden. In der bevorzugten Einbaulage im Kraftfahrzeug entspricht der bestimmte Temperaturwert einer Innenraumtemperatur des Kraftfahrzeugs.

Die Leiterplatte der Temperaturmesseinrichtung ist als flexible Leiterplatte ausgebildet.

Bei der Leiterplatte handelt es sich also beispielsweise um eine FPC (flexible printed circuit)-Folie. Die flexible Leiterplatte zeichnet sich dadurch aus, dass auf einen flexiblen Kunststoffträger elektrische Leitungen gedruckt werden. Die flexible Leiterplatte ist bei einer Krafteinwirkung auf die Leiterplatte, die kleiner als eine Grenzkraft ist, elastisch verformbar und somit flexibel. Dies bewirkt, dass die flexible Leiterplatte zumindest einen Freiheitsgrad aufweist. Auf der flexiblen Leiterplatte sind die zwei Temperatursensoren beabstandet voneinander angeordnet, wobei diese bevorzugt als jeweiliger NTC (negative temperature coefficient)-Thermistor ausgebildet sind. Die einzelnen Temperatursensoren sind also bevorzugt als sogenannte Heißleiter und somit als temperaturabhängige Widerstände ausgebildet. Alternativ dazu kann zumindest einer der Temperatursensoren als ein andersartig ausgestalteter Temperatursensor vorgesehen sein.

Die erfindungsgemäße Temperaturmesseinrichtung ist aufgrund der flexiblen und somit verformbaren Leiterplatte kompakt ausgebildet, wobei dennoch eine zuverlässige Temperaturmessung mittels der Temperaturmesseinrichtung möglich ist. Zudem benötigt die erfindungsgemäße Temperaturmesseinrichtung keine Fotodiode und ist daher, insbesondere aufgrund der thermisch leitfähigen Kappe in Kombination mit der flexiblen Leiterplatte, besonders kostengünstig herstellbar. Auf die Fotodiode kann insbesondere verzichtet werden, wenn als die bevorzugte Einbaulage der Temperaturmesseinrichtung ein Dachbereich des Kraftfahrzeugs gewählt wird. Es sollte also beim Einbau der Temperaturmesseinrichtung in das Kraftfahrzeug darauf geachtet werden, dass keine Sonneneinstrahlung auf die thermisch leitfähige Kappe treffen wird beziehungsweise dass nur mit einer geringen Wahrscheinlichkeit Sonneneinstrahlung auf die thermisch leitfähige Kappe treffen kann. Insbesondere in der bevorzugten Einbaulage kann daher mittels der Temperaturmesseinrichtung auch ohne Fotodiode zuverlässig und genau die Temperatur innerhalb des Kraftfahrzeugs bestimmt werden.

Die beanspruchte Erfindung sieht vor, dass ein erster Temperatursensor der zwei Temperatursensoren dazu ausgebildet ist, eine erste Temperaturinformation zu erfassen. Ein zweiter Temperatursensor der zwei Temperatursensoren ist dazu ausgebildet, eine zweite Temperaturinformation zu erfassen. Die Temperaturmesseinrichtung weist eine Auswerteeinheit auf, die dazu ausgebildet ist, unter Anwendung eines Auswertekriteriums auf die erfasste erste und zweite Temperaturinformation einen Temperaturwert zu bestimmen. Die Auswerteeinheit ist bevorzugt ebenfalls auf der flexiblen Leiterplatte angeordnet. Die Auswerteeinheit kann alternativ oder zusätzlich dazu mit der flexiblen Leiterplatte lediglich mittelbar gekoppelt sein.

Das Auswertekriterium umfasst bevorzugt zumindest eine Vorschrift, bei deren Anwendung auf die erste und/oder zweite Temperaturinformation die tatsächliche Temperatur der Umgebung im Bereich der thermisch leitfähigen Kappe bestimmt werden kann. Letztendlich fungiert bevorzugt einer der beiden Temperatursensoren, insbesondere der zweite Temperatursensor, als Vergleichssensor zum jeweiligen anderen Temperatursensor. Dadurch, dass die beiden Temperatursensoren zueinander räumlich beabstandet auf der Leiterplatte angeordnet sind, stehen die beiden Temperatursensoren nicht in einem direkten physischen Kontakt. Zwischen den beiden Temperatursensoren befindet sich ein Gas, zum Beispiel Luft, und/oder eine Flüssigkeit und/oder ein Füllmaterial der Temperaturmesseinrichtung. Dadurch, dass die beiden Temperatursensoren räumlich voneinander getrennt sind, wird erreicht, dass sich der erste und zweite Temperatursensor nicht gegenseitig beeinflussen. Die beiden Temperatursensoren sind thermisch voneinander annähernd isoliert. Letztendlich kann genau und präzise die tatsächliche Temperatur der Kappe und/oder der Umgebung der Kappe durch das Auswerten der Temperaturinformationen bestimmt werden. Der hierbei bestimmte Temperaturwert kann in der bevorzugten Einbaulage der Temperaturmesseinrichtung beispielweise der Klimaanlage des Kraftfahrzeugs bereitgestellt werden, sodass diese eine Temperaturregelung im Kraftfahrzeug auf Basis des Temperaturwerts durchführen kann.

Die beanspruchte Erfindung sieht vor, dass die Leiterplatte in einem Teilbereich der Leiterplatte auf einer ersten Seite der Leiterplatte mit der thermisch leitfähigen Kappe gekoppelt ist. Die Leiterplatte weist also einen Abschnitt auf, der bevorzugt an einem ersten Ende der Leiterplatte angeordnet ist, wobei die Leiterplatte nur in diesem Abschnitt, also im Teilbereich, zumindest mittelbar mit der thermisch leitfähigen Kappe verbunden ist. In der bevorzugten Einbaulage ist die Leiterplatte bevorzugt an einer dem Innenraum des Kraftfahrzeugs abgewandten Seite der thermisch leitfähigen Kappe mit dieser gekoppelt. Der erste Temperatursensor ist ebenfalls in dem Teilbereich der Leiterplatte auf der Leiterplatte angeordnet, jedoch auf einer der ersten Seite gegenüberliegenden zweiten Seite der Leiterplatte. Es befindet sich somit an die thermisch leitfähige Kappe anschließend beispielsweise zunächst die Leiterplatte und erst von der thermisch leitfähigen Kappe aus betrachtet hinter der Leiterplatte der erste Temperatursensor. Der erste Temperatursensor berührt also bevorzugt nicht unmittelbar die thermisch leitfähige Kappe. Der erste Temperatursensor steht mit der thermisch leitfähigen Kappe über die Leiterplatte im thermischen Kontakt. Der erste Temperatursensor ist also dazu ausgebildet, die von der thermisch leitfähigen Kappe angenommene Temperatur der Umgebung der Kappe, also eine Umgebungstemperatur, in Form der ersten Temperaturinformation zu messen. Da sich der erste Temperatursensor ebenfalls im Teilbereich der Leiterplatte befindet, in dem ebenfalls die thermisch leitfähige Kappe mit der Leiterplatte gekoppelt ist, liegen sich die thermisch leitfähige Kappe und der erste Temperatursensor gegenüber und sind lediglich durch zumindest die Leiterplatte voneinander getrennt. Dies ermöglicht einen besonders kompakten Aufbau der Temperaturmesseinrichtung.

Ein zusätzliches Ausführungsbeispiel sieht vor, dass die flexible Leiterplatte mittels eines thermisch leitfähigen Haftmittels mit der thermisch leitfähigen Kappe gekoppelt ist. Das thermisch leitfähige Haftmittel befindet sich im Teilbereich auf der ersten Seite der Leiterplatte und verbindet die flexible Leiterplatte mit der thermisch leitfähigen Kappe. Das Haftmittel ist beispielsweise als thermisch leitendes doppelseitiges Klebeband, insbesondere als derartige Klebebandfolie, ausgebildet. Es kann alternativ ein beliebiges Haftmittel gewählt werden, solange dieses thermisch leitfähig ist, das heißt die thermisch leitfähige Kappe durch das Haftmittel nicht von der Leiterplatte und dem auf der Leiterplatte angeordneten ersten Temperatursensor thermisch isoliert wird. Durch die Wahl des Haftmittels als thermisch leitendes doppelseitiges Klebeband wird eine besonders kostengünstige und einfach zu realisierende Kopplung der thermisch leitfähigen Kappe mit der Leiterplatte erreicht.

Ferner ist es in einem Ausführungsbeispiel vorgesehen, dass die thermisch leitfähige Kappe aus einem Kunststoff hergestellt ist. Bevorzugt ist die thermisch leitfähige Kappe aus Polycarbonat hergestellt. Im Grunde kann für die Kappe ein beliebiger Kunststoff verwendet werden, wobei an den Kunststoff die Bedingung gestellt ist, dass dieser nicht thermisch isoliert, sondern dazu ausgebildet ist, eine beispielsweise in der Umgebung der thermisch leitfähigen Kappe herrschende Temperatur ebenfalls anzunehmen und somit an den ersten Temperatursensor derart weiterzugeben, dass dieser die Temperatur der Umgebung erfassen kann.

Insgesamt wird durch die Wahl der flexiblen Leiterplatte sowie die Ausgestaltung der thermisch leitfähigen Kappe als Kunststoffkappe sowie die Verwendung beispielsweise des thermisch leitenden doppelseitigen Klebebands erreicht, dass die Temperaturmesseinrichtung kostengünstig herstellbar ist. Sie ist zudem kompakt und flexibel in ihrer Form gestaltbar, da durch die Verwendung der flexiblen Leiterplatte eine Anpassung an beliebig groß skalierte Räumlichkeiten erfolgen kann.

Ein weiterer Aspekt der Erfindung betrifft die erfindungsgemäße Dachbedienvorrichtung für ein Kraftfahrzeug. Die Dachbedienvorrichtung weist die oben beschriebene Temperaturmesseinrichtung auf. Innerhalb der Dachbedienvorrichtung ist also die Temperaturmesseinrichtung mit der thermisch leitfähigen Kappe und der flexiblen Leiterplatte mit den zwei Temperatursensoren angeordnet. Mittels der Auswerteeinheit der Temperaturmesseinrichtung kann der Temperaturwert mittels der Temperaturmesseinrichtung in der Dachbedienvorrichtung bestimmt werden. Die im Zusammenhang mit der erfindungsgemäßen Temperaturmesseinrichtung beschriebenen Ausführungsbeispiele und deren Vorteile gelten entsprechend für die Dachbedienvorrichtung, die die Temperaturmessvorrichtung gemäß einem oder einer Kombination der beschriebenen Ausführungsbeispiele umfassen kann.

Die Dachbedienvorrichtung weist ein Gehäuse mit einer Öffnung auf. Die thermisch leitfähige Kappe der Temperaturmesseinrichtung ist derart in dem Gehäuse angeordnet, dass eine Oberfläche der thermisch leitfähigen Kappe, die der flexiblen Leiterplatte abgewandt ist, in der Öffnung positioniert ist. Die Oberfläche der thermisch leitfähigen Kappe, die alternativ als Kappenoberfläche bezeichnet werden kann, ist beispielsweise gegenüber der Seite der thermisch leitfähigen Kappe angeordnet, die im Teilbereich der Leiterplatte auf der ersten Seite der Leiterplatte mit der thermisch leitfähigen Leiterplatte gekoppelt ist. Die der flexiblen Leiterplatte abgewandte Oberfläche ist somit der Leiterplatte nicht zugewandt und somit nicht dieser gegenüber angeordnet, sondern von der flexiblen Leiterplatte abgewandt und in eine andere Richtung, insbesondere in die entgegengesetzte Richtung, weisend.

Die Oberfläche der thermisch leitfähigen Kappe ragt bevorzugt aus der Dachbedienvorrichtung hervor. Hierbei kann eine Ebene der Oberfläche der thermisch leitfähigen Kappe parallel zu einer Ebene einer Oberfläche des Gehäuses um die Öffnung herum ausgerichtet sein. Bevorzugt sind die beiden Ebenen identisch. Alternativ dazu können die Ebenen zueinander versetzt angeordnet sein. Die Oberfläche der thermisch leitfähigen Kappe kann beispielsweise entweder aus der Öffnung des Gehäuses in die Umgebung der Dachbedienvorrichtung herausragen oder in die Öffnung versenkt sein, das heißt in einer Vertiefung des Gehäuses, die durch die Öffnung gebildet ist, angeordnet sein und relativ zur Ebene der Oberfläche des Gehäuses zurückstehen und somit nicht über die Ebene der Oberfläche des Gehäuses im Bereich der Öffnung aus der Dachbedienvorrichtung herausragen.

Die weiteren Komponenten der Temperaturmesseinrichtung, das heißt die flexible Leiterplatte und die beiden Temperatursensoren befinden sich innerhalb des Gehäuses und sind bei einem Blick von außen auf die Dachbedienvorrichtung bevorzugt nicht zu sehen, sondern vom Gehäuse verdeckt.

In einer bevorzugten Einbaulage der Dachbedienvorrichtung befindet sich diese eingebaut in ein Dach des Kraftfahrzeugs. Hierbei ist sie bevorzugt in einer Fahrzeugquerrichtung mittig in einem Frontbereich des Kraftfahrzeugs angeordnet, und zwar derart, dass sie von einem Benutzer des Kraftfahrzeugs von einem Fahrersitz und/oder einem Beifahrersitz des Kraftfahrzeugs aus gut mit einer Hand des Benutzers durch hochheben eines Arms in Richtung des Dachs des Kraftfahrzeugs zu bedienen ist. Die Öffnung des Gehäuses ist dem Fahrzeuginnenraum zugewandt. Dies bedeutet, dass die in der Öffnung angeordnete Oberfläche der thermisch leitfähigen Kappe dem Fahrzeuginnenraum zugewandt ist und in Kontakt mit dem Innenraum des Kraftfahrzeugs steht. Die Oberfläche der thermisch leitfähigen Kappe ist also von Luft umgeben, die typischerweise eine Durchschnittstemperatur des Innenraums des Kraftfahrzeugs aufweist.

Durch die Anordnung in der Dachbedienvorrichtung im Dach des Kraftfahrzeugs ist die thermisch leitfähige Kappe stets vor Sonneneinstrahlung geschützt, da Sonnenstrahlen typischerweise zu keinem Zeitpunkt derart durch Scheiben des Kraftfahrzeugs fallen können, dass sie die in Fahrzeugquerrichtung mittig im Dach des Kraftfahrzeugs angeordnete Dachbedienvorrichtung direkt bestrahlen und somit erwärmen können. Die Anordnung der Temperaturmesseinrichtung in der Dachbedienvorrichtung und der Dachbedienvorrichtung in deren bevorzugter Einbaulage ermöglicht also, dass trotz Weglassens der Fotodiode zuverlässig der tatsächliche Temperaturwert, der die tatsächliche Temperatur innerhalb des Fahrzeugs repräsentieren kann, bestimmt werden kann.

Ein Ausführungsbeispiel der Dachbedienvorrichtung sieht vor, dass die Dachbedienvorrichtung eine zentrale Leiterplatte aufweist. Die zentrale Leiterplatte ist mittels eines Verbindungselements mit der flexiblen Leiterplatte der Temperaturmesseinrichtung verbunden. Innerhalb der Dachbedienvorrichtung befinden sich somit zumindest zwei Leiterplatten, und zwar die zentrale Leiterplatte sowie die flexible Leiterplatte der Temperaturmesseinrichtung. Die zentrale Leiterplatte kann beispielsweise ebenfalls als flexible Leiterplatte ausgebildet sein. Die flexible Leiterplatte ist dazu ausgebildet, von der Dachbedienvorrichtung benötigte Auswerteeinheiten und/oder Steuereinheiten aufzuweisen. Hierfür kann beispielsweise auf der zentralen Leiterplatte ein Prozessor angeordnet sein, der dazu ausgebildet ist, ein Deckenlicht des Kraftfahrzeugs, das die Dachbedienvorrichtung aufweist, anzusteuern. Alternativ oder zusätzlich dazu kann in die Dachbedienvorrichtung eine automatische Öffnungsvorrichtung für ein Dachfenster des Kraftfahrzeugs integriert sein, wobei die entsprechende Steuereinheit ebenfalls auf der zentralen Leiterplatte angeordnet sein kann.

Das Verbindungselement zur zentralen Leiterplatte ist bevorzugt an einem zweiten Ende der flexiblen Leiterplatte angeordnet, wobei das zweite Ende das dem ersten Ende entgegengesetzte Ende der flexiblen Leiterplatte darstellt, wobei am ersten Ende der Teilbereich angeordnet ist, der mit der Kappe und dem ersten Temperatursensor gekoppelt ist. Der zweite Temperatursensor ist zwischen dem Verbindungselement und dem Teilbereich auf der flexiblen Leiterplatte angeordnet.

Ein zusätzliches Ausführungsbeispiel zeichnet sich dadurch aus, dass das Verbindungselement als ein Nullkraftsockel ausgebildet ist. Zwischen der zentralen Leiterplatte und der flexiblen Leiterplatte der Temperaturmesseinrichtung ist also der Nullkraftsockel, der auch als Nullkraftfassung bezeichnet werden kann, angeordnet. Ein derartiges Bauteil wird typischerweise als PCB ZIF-Connector bezeichnet, also als printed circuit board zero insertion force connector. Mithilfe des Nullkraftsockels kann die flexible Leiterplatte auswechselbar und einfach an der zentralen Leiterplatte befestigt sein, wobei weder für das Einsetzen noch für das Entfernen der beiden Leiterplatten voneinander starke Druck- und Zugkräfte erforderlich sind. Letztendlich wird hierdurch mit einfachen Mitteln sowie kostengünstig die Verbindung zwischen der zentralen Leiterplatte der Dachbedienvorrichtung und der flexiblen Leiterplatte der Temperaturmesseinrichtung, auf der zumindest die beiden Temperatursensoren angeordnet sind, ermöglicht.

Zusätzlich ist es in einem Ausführungsbeispiel vorgesehen, dass die zentrale Leiterplatte die Auswerteeinheit der Temperaturmesseinrichtung aufweist. Die Auswerteeinheit, mittels derer letztendlich der Temperaturwert bestimmt wird, befindet sich somit bevorzugt nicht als Komponente auf der flexiblen Leiterplatte der Temperaturmesseinrichtung selbst, sondern ist in die zentrale Leiterplatte der Dachbedienvorrichtung integriert. Dies ermöglicht eine besonders kompakte und einfache Ausgestaltung der flexiblen Leiterplatte und zudem eine Konzentrierung aller in der Dachbedienvorrichtung vorgesehenen Auswerte- und Steuereinheiten auf der zentralen Leiterplatte selbst.

Ferner sieht ein Ausführungsbeispiel vor, dass die zentrale Leiterplatte als starre Leiterplatte ausgebildet ist. Die zentrale Leiterplatte ist also bevorzugt als sogenannte PCB (printed circuit board) ausgebildet. Hierbei handelt es sich um eine gedruckte Schaltung, die typischerweise als Leiterplatte bezeichnet wird, wobei auf der PCB elektronische Bauteile befestigt und miteinander elektrisch verbunden sind. Eine derartige starre Leiterplatte ist besonders kostengünstig bereitstellbar und bietet ausreichend Möglichkeiten, um bei geeigneter Dimensionierung verschiedene beziehungsweise alle für die Dachbedienvorrichtung sinnvolle Auswerte- und Steuereinheiten auf dieser anzuordnen.

Zudem ist es in einem Ausführungsbeispiel vorgesehen, dass die Dachbedienvorrichtung ein kapazitives oder nicht-kapazitives Eingabeelement aufweist. Das kapazitive oder nicht-kapazitive Eingabeelement ist mit der flexiblen Leiterplatte verbunden. Alternativ oder zusätzlich dazu kann sowohl ein kapazitives als auch ein nicht-kapazitives Eingabeelement vorgesehen sein. Es können mehrere Eingabeelemente vorgesehen sein. Das Eingabeelement kann beispielsweise benachbart zur thermisch leitfähigen Kappe und somit in einer Umgebung der Öffnung im Gehäuse der Dachbedienvorrichtung angeordnet sein. Hierfür kann beispielsweise die flexible Leiterplatte entsprechend verlängert ausgestaltet werden. Bevorzugt ist das Eingabeelement am ersten Ende der flexiblen Leiterplatte benachbart zum Teilbereich der flexiblen Leiterplatte angeordnet, wobei vom ersten Ende der flexiblen Leiterplatte aus in Richtung des zweiten Endes der Leiterplatte betrachtet zunächst das Eingabeelement, dann der Teilbereich und dann das Verbindungselement angeordnet sind.

Das kapazitive Eingabeelement ist beispielsweise als kapazitive Sensorfläche, zum Beispiel als kapazitive Touchfolie, ausgebildet. Letztendlich kann mittels des kapazitiven Eingabeelements beispielsweise eine berührungssensitive Bedienvorrichtung in der Dachbedienvorrichtung vorgesehen sein. Das Eingabeelement ist jedoch nicht direkt an die starre zentrale Leiterplatte angeschlossen, sondern mit dieser über die flexible Leiterplatte verbunden. Dies ermöglicht eine große Vielzahl an Relativanordnungen des Eingabeelements zur thermisch leitfähigen Kappe und somit letztendlich innerhalb des Gehäuses der Dachbedienvorrichtung bevorzugt auf einer dem Innenraum des Kraftfahrzeugs zugewandten Gehäuseseite.

Mithilfe des kapazitiven oder nicht-kapazitiven Eingabeelements kann beispielsweise eine Bedienung der Dachbedienvorrichtung realisiert werden. Beispielsweise kann mittels des Eingabeelements ein Leselicht, das ebenfalls in das Gehäuse der Dachbedienvorrichtung integriert ist, an- oder ausgeschaltet werden. Beispielsweise kann eine Oberfläche des Leselichts zumindest teilweise oder vollständig als berührungssensitive Folie ausgebildet sein und somit ein großflächiges kapazitives Eingabeelement darstellen. Alternativ dazu kann eine kapazitive oder nicht-kapazitive Taste und/oder Slider und/oder Knopf in der Dachbedienvorrichtung vorgesehen sein. Es kann bei dem nicht-kapazitiven Eingabeelement vorgesehen sein, das dieses mechanisch vom Benutzer des Kraftfahrzeugs bedienbar ist. Es kann beispielsweise ein nicht-kapazitiver Dreh-Drückschalter vorgesehen sein.

Insgesamt kann also die Dachbedienvorrichtung das Eingabeelement aufweisen und somit vielseitig aber dennoch intern kompakt ausgebildet sein.

Darüber hinaus sieht es ein Ausführungsbeispiel vor, dass die Dachbedienvorrichtung eine Anzeigeeinrichtung aufweist, die mit der flexiblen Leiterplatte verbunden ist. Die Anzeige kann beispielsweise zur Informationsdarstellung ausgebildet sein und analog oder alternativ zum kapazitiven oder nicht-kapazitiven Eingabeelement mit der flexiblen Leiterplatte verbunden sein. Die Anzeigeeinrichtung kann beispielsweise als LED (light emitting diode)-Leuchte ausgebildet sein und einer Beleuchtung des Innenraums des Kraftfahrzeugs dienen. Die einzelnen Komponenten der Dachbedienvorrichtung können letztendlich jeweils über die flexible Leiterplatte an die zentrale Leiterplatte der Dachbedienvorrichtung angeschlossen sein, sodass keine zusätzlichen Verbindungen innerhalb der Dachbedienvorrichtung benötigt werden als die flexible Leiterplatte.

Ein weiterer Aspekt der Erfindung betrifft ein System zum Bereitstellen eines Temperaturwerts für eine Klimaanlage eines Kraftfahrzeugs. Das System weist die oben beschriebene Dachbedienvorrichtung auf. Das System kann weiterhin ein Ausführungsbeispiel oder eine Kombination von Ausführungsbeispielen der Dachbedienvorrichtung aufweisen.

Zudem weist das System die Klimaanlage des Kraftfahrzeugs auf. Die Klimaanlage ist dazu ausgebildet, eine eingestellte Temperatur unabhängig von einem Wetter, einer Abwärme und/oder menschlichen und technischen Emissionen im Kraftfahrzeug einzustellen und gegebenenfalls zu halten. Die Klimaanlage kann als eine Kühlung und/oder Heizung für die Luft im Innenraum des Kraftfahrzeugs ausgebildet sein.

Die Dachbedienvorrichtung ist mittels eines Fahrzeugbusses mit der Klimaanlage gekoppelt. Die Dachbedienvorrichtung ist dazu ausgebildet, einen mittels der Auswerteeinheit der Temperaturmesseinrichtung der Dachbedienvorrichtung bestimmten Temperaturwert mittels des Fahrzeugbusses an die Klimaanlage zu übermitteln. Der mittels der Temperaturmesseinrichtung bestimmte Temperaturwert wird also der Klimaanlage des Kraftfahrzeugs bereitgestellt, sodass diese beispielsweise basierend auf diesem das Einstellen der eingestellten Temperatur im Kraftfahrzeug durchführen kann.

Der Vorteil hiervon ist, dass durch die bevorzugte Einbaulage der Dachbedienvorrichtung im Dach des Kraftfahrzeugs erreicht wird, dass die Temperaturmesseinrichtung keiner direkten Sonneneinstrahlung ausgesetzt ist. Dies ermöglicht, dass letztendlich besonders zuverlässig die Temperatur des Innenraums des Kraftfahrzeugs bestimmt werden kann und für die Steuerung der Klimaanlage des Kraftfahrzeugs verwendet werden kann, sofern das System im Kraftfahrzeug vorgesehen ist.

Besonders bevorzugt weist die Temperaturmesseinrichtung für die Klimaanlage des Kraftfahrzeugs eine thermisch leitfähige Kappe, eine Leiterplatte, die in einem Teilbereich der Leiterplatte auf einer ersten Seite der Leiterplatte mit der thermisch leitfähigen Kappe gekoppelt ist, einen ersten Temperatursensor, der in dem Teilbereich auf einer der ersten Seite gegenüberliegenden zweiten Seite der Leiterplatte auf der Leiterplatte angeordnet dazu ausgebildet ist, eine erste Temperaturinformation zu erfassen, einen zweiten Temperatursensor, der räumlich beabstandet zum ersten Temperatursensor und der thermisch leitfähigen Kappe auf der Leiterplatte angeordnet und dazu ausgebildet ist, eine zweite Temperaturinformation zu erfassen und eine Auswerteeinheit, die dazu ausgebildet ist, unter Anwendung eines Auswertekriteriums auf die erfasste erste und zweite Temperaturinformation einen Temperaturwert zu bestimmen, auf. Darüber hinaus zeichnet sich die Temperaturmesseinrichtung dadurch aus, dass die Leiterplatte als flexible Leiterplatte ausgebildet ist.

Angegebene konkrete Werte für den Mindestabstand sind auch im Rahmen von Abweichungen, beispielsweise aufgrund von Messfehlern, Systemfehlern, DIN-Toleranzen etc., als vom Rahmen der Erfindung mitumfasst anzusehen.

Dabei zeigen:
- Fig. 1: eine schematische Darstellung eines Kraftfahrzeugs mit einer Dachbedienvorrichtung mit einer Temperaturmesseinrichtung;
- Fig. 2: eine Perspektivansicht einer Temperaturmesseinrichtung für eine Klimaanlage eines Kraftfahrzeugs;
- Fig. 3: eine Draufsicht auf eine Dachbedienvorrichtung für ein Kraftfahrzeug;
- Fig. 4: eine schematische Darstellung eines Querschnitts einer Dachbedienvorrichtung für ein Kraftfahrzeug; und
- Fig. 5: eine Perspektivansicht einer Temperaturmesseinrichtung mit daran angeschlossenem Eingabeelement oder daran angeschlossener Anzeigevorrichtung.

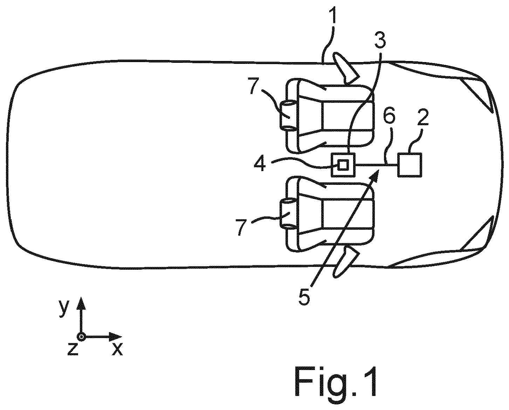

In Fig. 1 ist ein Kraftfahrzeug 1 skizziert, das eine Klimaanlage 2 sowie eine Dachbedienvorrichtung 3 aufweist. Die Dachbedienvorrichtung 3 ist mittels eines Fahrzeugbusses 6 mit der Klimaanlage 2 des Kraftfahrzeugs 1 verbunden. Die Dachbedienvorrichtung 3 weist eine Temperaturmesseinrichtung 4 auf. Zumindest die Klimaanlage 2 zusammen mit der Dachbedienvorrichtung 3, die die Temperaturmesseinrichtung 4 aufweist, bilden ein System 5 zum Bereitstellen eines Temperaturwerts für die Klimaanlage 2 des Kraftfahrzeugs 1.

In Fig. 1 ist eine Fahrzeuglängsrichtung als x-Richtung, eine Fahrzeugquerrichtung als y-Richtung sowie eine Fahrzeughochrichtung als z-Richtung skizziert. Die Dachbedienvorrichtung 3 ist bevorzugt in der Fahrzeugquerrichtung mittig zwischen zwei Fahrzeugsitzen 7 in einem Frontbereich des Kraftfahrzeugs 1 angeordnet.

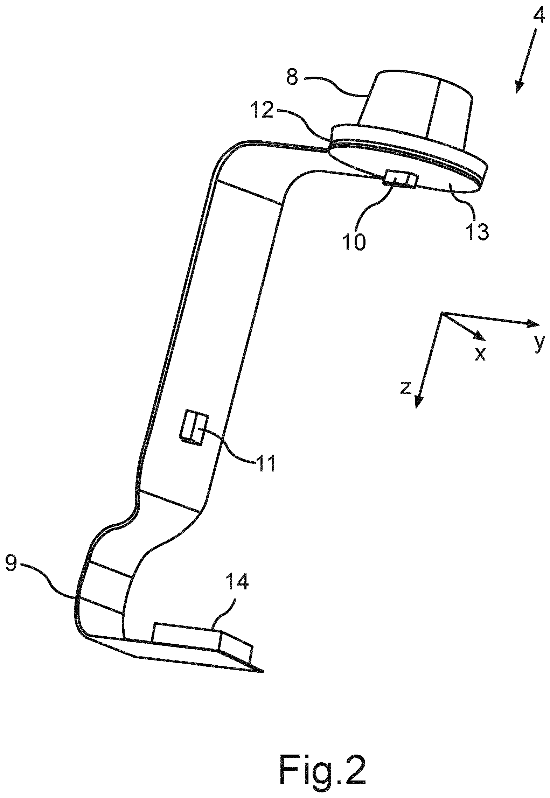

In Fig. 2 ist die Temperaturmesseinrichtung 4 der Dachbedienvorrichtung 3 in einer Perspektivansicht skizziert. Die Temperaturmesseinrichtung 4 weist eine thermisch leitfähige Kappe 8 und eine flexible Leiterplatte 9 auf, auf der zwei Temperatursensoren 10, 11 angeordnet sind. Die thermisch leitfähige Kappe 8 ist hier aus einem Kunststoff hergestellt, bevorzugt aus Polycarbonat. Die zwei Temperatursensoren 10, 11 sind zueinander räumlich beabstandet angeordnet, wobei hier ein erster Temperatursensor 10 und ein zweiter Temperatursensor 11 unterschieden werden. Der erste Temperatursensor 10 ist dazu ausgebildet, eine erste Temperaturinformation zu erfassen. Der zweite Temperatursensor 11 ist dazu ausgebildet, eine zweite Temperaturinformation zu erfassen.

Zwischen der Leiterplatte 9 und der thermisch leitfähigen Kappe 8 ist ein thermisch leitfähiges Haftmittel 12 angeordnet. Das thermisch leitfähige Haftmittel 12 ist beispielsweise als thermisch leitfähiges doppelseitiges Klebeband ausgebildet. Die Leiterplatte 9 weist einen Teilbereich 13 der Leiterplatte 9 auf, in dem die Leiterplatte 9 zum einen mittels des Haftmittels 12 mit der thermisch leitfähigen Kappe 8 gekoppelt ist. In dem Teilbereich 13 befindet sich zudem der erste Temperatursensor 10 auf der Leiterplatte 9.

Die Temperaturmesseinrichtung 4 weist eine Auswerteeinheit 14 auf, die dazu ausgebildet ist, unter Anwendung eines Auswertekriteriums auf die erfasste erste und zweite Temperaturinformation einen Temperaturwert zu bestimmen. Der Temperaturwert beschreibt eine Temperatur in einem Umgebungsbereich der thermisch leitfähigen Kappe 8. Das Auswertekriterium umfasst zumindest eine Vorschrift, die ermöglicht, aus der ersten und zweiten Temperaturinformation auf die Temperatur in der Umgebung der thermisch leitfähigen Kappe 8 zurückzuschließen. Die Auswerteeinheit 14 kann an einer beliebigen Position auf der flexiblen Leiterplatte 9 angeordnet sein. Die in Fig. 2 skizzierte Position ist ein mögliches Beispiel für die Position der Auswerteeinheit 14.

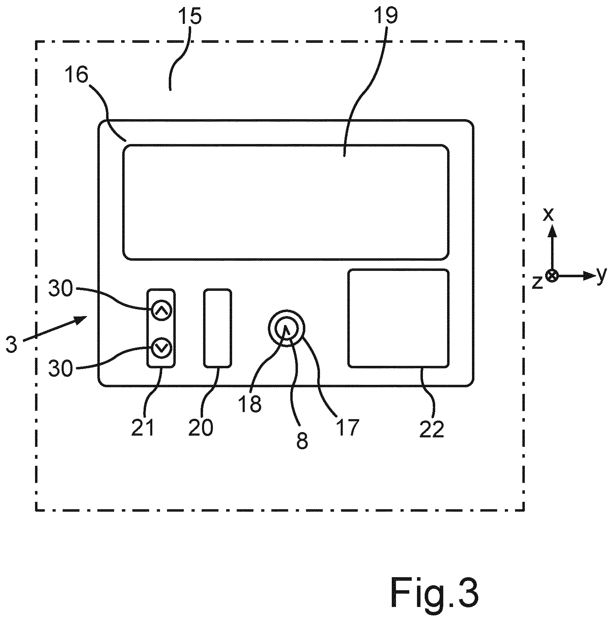

In Fig. 3 ist eine Draufsicht auf die Dachbedienvorrichtung 3 skizziert. Hierbei ist die Dachbedienvorrichtung 3 in einer bevorzugten Einbaulage in einem Dach 15 des Kraftfahrzeugs 1 angeordnet. Die hier in Fig. 3 eingezeichneten x-, y- und z-Richtungen entsprechen den für Fig. 1 und Fig. 2 skizzierten x-, y- und z-Richtungen, also den auf das Kraftfahrzeug 1 bezogenen Richtungen. Insgesamt beziehen sich alle in den Figuren dargestellten Koordinatensysteme stets auf die in Fig. 1 skizzierten Richtungen des Kraftfahrzeugs 1.

Die Dachbedienvorrichtung 3 weist ein Gehäuse 16 auf. Das Gehäuse 16 wiederum weist eine Öffnung 17 auf. Die thermisch leitfähige Kappe 8 der Temperaturmesseinrichtung 4 ist derart im Gehäuse 16 angeordnet, dass eine der flexiblen Leiterplatte 9 abgewandte Oberfläche 18 der thermisch leitfähigen Kappe 8 in der Öffnung 17 positioniert ist.

Die Dachbedienvorrichtung 3 weist zudem eine Leuchteinrichtung 19, und zwar ein Leselicht für das Kraftfahrzeug 1, auf. Darüber hinaus weist die hier gezeigte Dachbedienvorrichtung 3 ein kapazitives Eingabeelement 20, ein nicht-kapazitives Eingabeelement 21 sowie eine Anzeigeeinrichtung 22 auf. Die Anzeigeeinrichtung 22 kann als die Leuchteinrichtung 19 und/oder als Bildschirm zum Anzeigen von Anzeigeinhalten, beispielsweise zum Anzeigen einer Information, ausgebildet sein. Das kapazitive Eingabeelement 20 kann beispielsweise als berührungssensitives Bedienelement ausgebildet sein, mithilfe dessen beispielsweise ein Fahrzeugdach des Kraftfahrzeugs 1 angesteuert werden kann und/oder die Leuchteinrichtung 19 und/oder die Anzeigeeinrichtung 22 aktiviert oder deaktiviert werden kann. Das nicht-kapazitive Eingabeelement 21 kann beispielsweise zwei Drückknöpfe 30 aufweisen, mithilfe derer das Fahrzeugdach geöffnet oder geschlossen werden kann und/oder die Leuchteinrichtung 19 und/oder die Anzeigeeinrichtung 22 aktiviert oder deaktiviert werden kann.

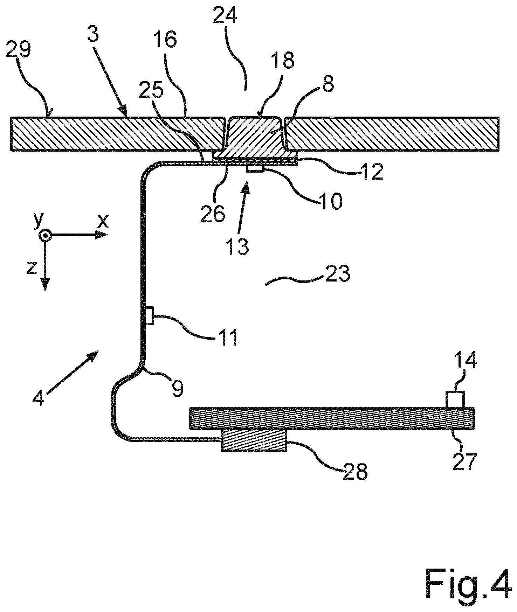

In Fig. 4 ist ein Querschnitt durch die Dachbedienvorrichtung 3 mit der darin angeordneten Temperaturmesseinrichtung 4 skizziert. Hier wird zum einen deutlich, dass das Gehäuse 16 an einen Innenraum des Gehäuses 16, das heißt einen Gehäuseinnenraum 23, sowie an den Innenraum des Kraftfahrzeugs 1, das heißt einen Fahrzeuginnenraum 24, angrenzt. Der Gehäuseinnenraum 23 ist hier mit Luft gefüllt. Ein Abstand zwischen dem ersten Temperatursensor 10 und dem zweiten Temperatursensor 11 kann beispielsweise in etwa einen Zentimeter betragen. Die Oberfläche 18 der thermisch leitfähigen Kappe 8 schließt hier bündig mit einer Ebene des Gehäuses 16 ab, wobei diese Ebene durch eine Gehäuseoberfläche 29 gebildet ist. Die thermisch leitfähige Kappe 8 kann jedoch alternativ in z-Richtung zur Gehäuseoberfläche 29 des Gehäuses 16 versetzt sein und beispielsweise aus der Öffnung 17 in den Fahrzeuginnenraum 24 hineinragen und/oder relativ zur Öffnung 17 zurückgesetzt sein und somit in einer Aussparung des Gehäuses 16 angeordnet sein (hier nicht dargestellt). Die Kappe 8 wäre dann in negativer beziehungsweise positiver z-Richtung relativ zur Gehäuseoberfläche 29 versetzt.

In Fig. 4 wird deutlich, dass die flexible Leiterplatte 9 im Teilbereich 13 eine erste Seite 25 sowie eine der ersten Seite 25 gegenüberliegende zweite Seite 26 aufweist. Die Leiterplatte ist auf der ersten Seite 25 mit der thermisch leitfähigen Kappe 8 gekoppelt und auf der zweiten Seite 26 ist der erste Temperatursensor 10 angeordnet. Zwischen der thermisch leitfähigen Kappe 8 und der Leiterplatte 9 befindet sich auf der ersten Seite 25 im Teilbereich 13 das thermisch leitfähige Haftmittel 12.

Die Dachbedienvorrichtung 3 weist eine zentrale Leiterplatte 27 auf, die als starre Leiterplatte 27 ausgebildet ist. Als starre Leiterplatte 27 wird hier eine PCB (printed circuit board) verstanden. Die zentrale Leiterplatte 27 ist mittels eines Verbindungselements 28, das als Nullkraftsockel ausgebildet ist, mit der flexiblen Leiterplatte 9 der Temperaturmesseinrichtung 4 verbunden. Die zentrale Leiterplatte 27 weist hier die Auswerteeinheit 14 der Temperaturmesseinrichtung 4 auf. Darüber hinaus kann die zentrale Leiterplatte 27 beispielsweise eine weitere Auswerteeinheit, eine Steuereinheit für eine automatische Öffnungseinrichtung für ein Dachfenster des Kraftfahrzeugs 1, eine Steuereinheit für die Leuchteinrichtung 19 und/oder eine Steuereinheit für das kapazitive Eingabeelement 20, das nicht-kapazitive Eingabeelement 21 und/oder die Anzeigeeinrichtung 22 aufweisen.

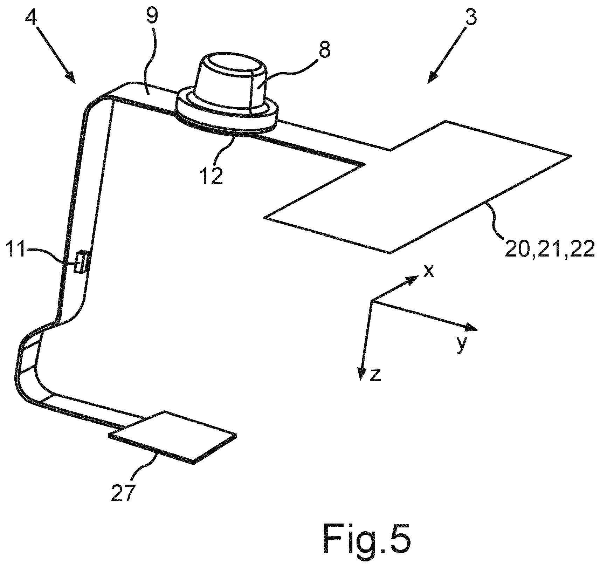

Fig. 5 zeigt eine Perspektivansicht eines Ausführungsbeispiels, bei dem das kapazitive Eingabeelement 20, das nicht-kapazitive Eingabeelement 21 und/oder die Anzeigeeinrichtung 22 ebenfalls mit der flexiblen Leiterplatte 9 verbunden sind. Hierbei kann alternativ vorgesehen sein, dass mehrere dieser Zusatzkomponenten, das heißt beispielsweise das kapazitive Eingabeelement 20 und das nicht-kapazitive Eingabeelement 21 und zudem noch die Anzeigeeinrichtung 22 jeweils mit der flexiblen Leiterplatte 9 verbunden sind. Über die flexible Leiterplatte 9 sind das jeweilige Eingabeelement 20, 21 und/oder die Anzeigeeinrichtung 22 mit dem Verbindungselement 28 und über dieses mit der zentralen Leiterplatte 27 der Dachbedienvorrichtung 3 verbunden. Die Temperaturmesseinrichtung 4 weist hier weiterhin den ersten Temperatursensor 10 sowie die Auswerteeinheit 14 und das Verbindungselement 28 auf, obwohl diese in Fig. 4 aus perspektivischen Gründen nicht zu erkennen sind.

Das System 5 als Ganzes ist dazu ausgebildet, mittels des Fahrzeugbusses 6, der ein Datenbus sein kann, den mittels der Auswerteeinheit 14 der Temperaturmesseinrichtung 4 der Dachbedienvorrichtung 3 bestimmten Temperaturwert an die Klimaanlage 2 des Kraftfahrzeugs 1 zu übermitteln. Die Klimaanlage 2 kann daraufhin eine Klimatisierung innerhalb des Kraftfahrzeugs 1 basierend auf dem im Dachbereich, das heißt im Dach 15 des Kraftfahrzeugs 1, ermittelten Temperaturwert, der die Temperatur im Fahrzeuginnenraum 24 repräsentiert, anzusteuern.

Insgesamt zeigen die Beispiele eine Temperaturmesseinrichtung 4 für die Klimaanlage 2 des Kraftfahrzeugs 1, wobei die Temperaturmesseinrichtung 4 die thermisch leitfähige Kappe 8 aufweist, die letztendlich in einer Blendenöffnung der Dachbedienvorrichtung 3, das heißt in der Öffnung 17 im Gehäuse 16 im Dach 15 des Kraftfahrzeugs 1, montiert werden kann. Die Kappe 8 ist auf der ersten Seite 25 der flexiblen Leiterplatte 9 montiert. Auf der gegenüberliegenden zweiten Seite 26 ist der erste Temperatursensor 10 der Temperaturmesseinrichtung 4 vorgesehen. Davon beabstandet ist der zweite Temperatursensor 11 auf der flexiblen Leiterplatte 9 angeordnet. Vorzugsweise ist die elastische Leiterplatte 9 Teil einer kapazitiven Eingabevorrichtung, das heißt des kapazitiven Eingabeelements 20. Letztendlich wird hierdurch ermöglicht, dass auf eine Fotodiode verzichtet werden kann, da die Temperaturmesseinrichtung 4 in das Dach 15 des Kraftfahrzeugs 1 integriert sein wird. Da dort kein Risiko für direkte Sonneneinstrahlung auf die Kappe 8 besteht, kann auf die Fotodiode verzichtet werden. Dies führt zu einer Vereinfachung und Kosteneinsparung hinsichtlich der Ausgestaltung der Temperaturmesseinrichtung 4.

Durch die Verwendung von beispielsweise sogenannten SMT NTC (surface mount negative temperature coefficient)-Thermistoren als Temperatursensoren 10, 11 und die Verwendung des Nullkraftsockels in Kombination mit der flexiblen Leiterplatte 9 werden zusätzliche Kostenersparnisse erreicht. Durch die flexible Leiterplatte 9 ist zudem eine flexible Positionierung der beiden Temperatursensoren 10, 11 innerhalb der Temperaturmesseinrichtung 4 beziehungsweise der Dachbedienvorrichtung 3 möglich. Außerdem können besonders einfach weitere Funktionen für die Dachbedienvorrichtung 3 integriert werden, wie beispielsweise das kapazitive Eingabeelement 20, das nicht-kapazitive Eingabeelement 21 und/oder die Anzeigeeinrichtung 22. Letztendlich wird also eine Messung einer Innenraumtemperatur des Kraftfahrzeugs 1 basierend auf einer Innenraumtemperatur des Kraftfahrzeugs 1 bereitgestellt, wobei die Oberflächentemperatur im Bereich des Innenraums des Kraftfahrzeugs 1 ohne direkte Sonneneinstrahlung, das heißt im Bereich des Dachs 15 ermittelt wird.

## Patentansprüche

1. Temperaturmesseinrichtung (4) für eine Klimaanlage (2) eines Kraftfahrzeugs (1), aufweisend:
- eine thermisch leitfähige Kappe (8); und
- eine Leiterplatte (9) mit zwei Temperatursensoren (10,11), die zueinander räumlich beabstandet auf der Leiterplatte (9) angeordnet sind;
**dadurch gekennzeichnet, dass**
die Leiterplatte (9) als flexible Leiterplatte (9) ausgebildet ist,
wobei:
- ein erster Temperatursensor (10) der zwei Temperatursensoren (10, 11) dazu ausgebildet ist, eine erste Temperaturinformation zu erfassen; und
- ein zweiter Temperatursensor (11) der zwei Temperatursensoren (10, 11) dazu ausgebildet ist, eine zweite Temperaturinformation zu erfassen; und
- die Temperaturmesseinrichtung (4) eine Auswerteeinheit (14) aufweist, die dazu ausgebildet ist, unter Anwendung eines Auswertekriteriums auf die erfasste erste und zweite Temperaturinformation einen Temperaturwert zu bestimmen,
**dadurch gekennzeichnet, dass** die flexible Leiterplatte (9) in einem Teilbereich (13) der flexiblen Leiterplatte (9) auf einer ersten Seite (25) der flexiblen Leiterplatte (9) mit der thermisch leitfähigen Kappe (8) gekoppelt und der erste Temperatursensor (10) in dem Teilbereich (13) auf einer der ersten Seite (25) gegenüberliegenden zweiten Seite (26) der flexiblen Leiterplatte (9) auf der flexiblen Leiterplatte (9) angeordnet ist.

2. Temperaturmesseinrichtung (4) nach Anspruch 1, **dadurch gekennzeichnet, dass** die flexible Leiterplatte (9) mittels eines thermisch leitfähigen Haftmittels (12) mit der thermisch leitfähigen Kappe (8) gekoppelt ist.

3. Temperaturmesseinrichtung (4) nach einem der vorhergehenden Ansprüche, **dadurch gekennzeichnet, dass** die thermisch leitfähige Kappe (8) aus einem Kunststoff, insbesondere aus Polycarbonat, hergestellt ist.

4. Dachbedienvorrichtung (3) für ein Kraftfahrzeug (1), wobei die Dachbedienvorrichtung (3) eine Temperaturmesseinrichtung (4) nach einem der vorhergehenden Ansprüche aufweist,
**dadurch gekennzeichnet, dass**
die Dachbedienvorrichtung (3) ein Gehäuse (16) mit einer Öffnung (17) aufweist und die thermisch leitfähige Kappe (8) der Temperaturmesseinrichtung (4) derart im Gehäuse (16) angeordnet ist, dass eine der flexiblen Leiterplatte (9) abgewandte Oberfläche (18) der thermisch leitfähigen Kappe (8) in der Öffnung (17) positioniert ist.

5. Dachbedienvorrichtung (3) nach Anspruch 6, **dadurch gekennzeichnet, dass** die Dachbedienvorrichtung (3) eine zentrale Leiterplatte (27) aufweist, die mittels eines Verbindungselements (28) mit der flexiblen Leiterplatte (9) der Temperaturmesseinrichtung (4) verbunden ist.

6. Dachbedienvorrichtung (3) nach Anspruch 5, **dadurch gekennzeichnet, dass** das Verbindungselement (28) als ein Nullkraftsockel ausgebildet ist.

7. Dachbedienvorrichtung (3) nach einem der Ansprüche 5 oder 6, **dadurch gekennzeichnet, dass** die zentrale Leiterplatte (27) eine Auswerteeinheit (14) der Temperaturmesseinrichtung (4) aufweist.

8. Dachbedienvorrichtung (3) nach einem der Ansprüche 5 bis 7, **dadurch gekennzeichnet, dass** die zentrale Leiterplatte (27) als starre Leiterplatte (27) ausgebildet ist.

9. Dachbedienvorrichtung (3) nach einem der Ansprüche 4 bis 8, **dadurch gekennzeichnet, dass** die Dachbedienvorrichtung (3) ein kapazitives und/oder nicht-kapazitives Eingabeelement (20, 21) aufweist, das mit der flexiblen Leiterplatte (9) verbunden ist.

10. Dachbedienvorrichtung (3) nach einem der Ansprüche 4 bis 9, **dadurch gekennzeichnet, dass** die Dachbedienvorrichtung (3) eine Anzeigeeinrichtung (22) aufweist, die mit der flexiblen Leiterplatte (9) verbunden ist.

11. System (5) zum Bereitstellen eines Temperaturwerts für eine Klimaanlage (2) eines Kraftfahrzeugs (1), wobei das System (5) eine Dachbedienvorrichtung (3) nach einem der Ansprüche 4 bis 10, und die Klimaanlage (2) des Kraftfahrzeugs (1) aufweist,
**dadurch gekennzeichnet, dass**
die Dachbedienvorrichtung (3) mittels eines Fahrzeugbusses (6) mit der Klimaanlage (2) gekoppelt und dazu ausgebildet ist, einen mittels einer Auswerteeinheit (14) der Temperaturmesseinrichtung (4) der Dachbedienvorrichtung (3) bestimmten Temperaturwert über den Fahrzeugbus (6) an die Klimaanlage (2) zu übermitteln.

## Claims

1. Temperature-measuring device (4) for an air-conditioning system (2) of a motor vehicle (1), comprising:
- a thermally conductive cap (8); and
- a printed circuit board (9) having two temperature sensors (10, 11), which are arranged spatially spaced apart from each other on the printed circuit board (9); **characterized in that**
the printed circuit board (9) is designed as a flexible printed circuit board (9), wherein:
- a first temperature sensor (10) of the two temperature sensors (10, 11) is designed to acquire a first item of temperature information; and
- a second temperature sensor (11) of the two temperature sensors (10, 11) is designed to acquire a second item of temperature information; and
- the temperature-measuring device (4) has an evaluation unit (14), which is designed to determine a temperature value by applying an evaluation criterion to the first and the second item of temperature information acquired,
**characterized in that** the flexible printed circuit board (9) is coupled to the thermally conductive cap (8) in a subregion (13) of the flexible printed circuit board (9) on a first side (25) of the flexible printed circuit board (9) and the first temperature sensor (10) is arranged on the flexible printed circuit board (9) in the subregion (13) on a second side (26), which is situated opposite the first side (25), of the flexible printed circuit board (9).

2. Temperature-measuring device (4) according to Claim 1, **characterized in that** the flexible printed circuit board (9) is coupled to the thermally conductive cap (8) by means of a thermally conductive adhesive (12).

3. Temperature-measuring device (4) according to any of the preceding claims, **characterized in that** the thermally conductive cap (8) is produced from a plastic, in particular from polycarbonate.

4. Roof-operating apparatus (3) for a motor vehicle (1), wherein the roof-operating apparatus (3) has a temperature-measuring device (4) according to any of the preceding claims,
**characterized in that**
the roof-operating apparatus (3) has a housing (16) with an opening (17) and the thermally conductive cap (8) of the temperature-measuring device (4) is arranged in the housing (16) in such a way that a surface (18) of the thermally conductive cap (8) facing away from the flexible printed circuit board (9) is positioned in the opening (17).

5. Roof-operating apparatus (3) according to Claim 6, **characterized in that** the roof-operating apparatus (3) has a central printed circuit board (27), which is connected to the flexible printed circuit board (9) of the temperature-measuring device (4) by means of a connecting element (28).

6. Roof-operating apparatus (3) according to Claim 5, **characterized in that** the connecting element (28) is in the form of a zero insertion force interface.

7. Roof-operating apparatus (3) according to either of Claims 5 and 6, **characterized in that** the central printed circuit board (27) has an evaluation unit (14) of the temperature-measuring device (4).

8. Roof-operating apparatus (3) according to any of Claims 5 to 7, **characterized in that** the central printed circuit board (27) is designed as a rigid printed circuit board (27).

9. Roof-operating apparatus (3) according to any of Claims 4 to 8, **characterized in that** the roof-operating apparatus (3) has a capacitive and/or non-capacitive input element (20, 21), which is connected to the flexible printed circuit board (9).

10. Roof-operating apparatus (3) according to any of Claims 4 to 9, **characterized in that** the roof-operating apparatus (3) has a display device (22), which is connected to the flexible printed circuit board (9).

11. System (5) for providing a temperature value for an air-conditioning system (2) of a motor vehicle (1), wherein the system (5) has a roof-operating apparatus (3) according to any of Claims 4 to 10 and the air-conditioning system (2) of the motor vehicle (1), **characterized in that**
the roof-operating apparatus (3) is coupled to the air-conditioning system (2) by means of a vehicle bus (6) and is designed to transmit a temperature value determined by means of an evaluation unit (14) of the temperature-measuring device (4) of the roof-operating apparatus (3) to the air-conditioning system (2) via the vehicle bus (6).

## Revendications

1. Dispositif (4) de mesure de température pour un système de climatisation (2) d'un véhicule automobile (1), comprenant :
- une coiffe thermoconductrice (8) ; et
- une carte à circuit imprimé (9) avec deux capteurs de température (10, 11) qui sont agencés sur la carte à circuit imprimé (9) à distance l'un de l'autre ; **caractérisé en ce que**
la carte à circuit imprimé (9) est conçue sous la forme d'une carte flexible (9) à circuit imprimé, dans laquelle :
- un premier capteur de température (10) parmi les deux capteurs de température (10, 11) est conçu pour enregistrer une première information de température ; et
- un deuxième capteur de température (11) parmi les deux capteurs de température (10, 11) est conçu pour enregistrer une deuxième information de température ; et
- le dispositif (4) de mesure de température comprend une unité d'évaluation (14) qui est conçue pour déterminer une valeur de température en appliquant un critère d'évaluation aux première et deuxième informations de température enregistrées,
**caractérisé en ce que** la carte flexible (9) à circuit imprimé est reliée à la coiffe thermoconductrice (8) dans une zone partielle (13) de la carte flexible (9) à circuit imprimé sur un premier côté (25) de la carte flexible (9) à circuit imprimé et **en ce que** le premier capteur de température (10) est agencé sur la carte flexible (9) à circuit imprimé, dans la zone partielle (13) sur un deuxième côté (26) de la carte flexible (9) à circuit imprimé opposé au premier côté (25).

2. Dispositif (4) de mesure de température selon la revendication 1, **caractérisé en ce que** la carte flexible (9) à circuit imprimé est reliée à la coiffe thermoconductrice (8) au moyen d'un adhésif thermoconducteur (12).

3. Dispositif (4) de mesure de température selon l'une des revendications précédentes, **caractérisé en ce que** la coiffe thermoconductrice (8) est fabriquée en matière plastique, en particulier en polycarbonate.

4. Dispositif de commande (3) monté sur le toit, pour un véhicule automobile (1), le dispositif de commande (3) monté sur le toit comportant un dispositif (4) de mesure de température selon l'une des revendications précédentes,
**caractérisé en ce que**
le dispositif de commande (3) monté sur le toit comprend un boîtier (16) avec une ouverture (17) et la coiffe thermoconductrice (8) du dispositif (4) de mesure de température est agencée dans le boîtier (16) de telle sorte qu'une surface (18) de la coiffe thermoconductrice (8) opposée à la carte flexible (9) à circuit imprimé est positionnée dans l'ouverture (17).

5. Dispositif de commande (3) monté sur le toit selon la revendication 6, **caractérisé en ce que** le dispositif de commande (3) monté sur le toit présente une carte à circuit imprimé centrale (27) qui est reliée à la carte flexible (9) à circuit imprimé du dispositif (4) de mesure de température au moyen d'un élément de liaison (28).

6. Dispositif de commande (3) monté sur le toit selon la revendication 5, **caractérisé en ce que** l'élément de liaison (28) est conçu sous la forme d'un socle à force nulle.

7. Dispositif de commande (3) monté sur le toit selon l'une des revendications 5 ou 6, **caractérisé en ce que** la carte à circuit imprimé centrale (27) comprend une unité d'évaluation (14) du dispositif (4) de mesure de température.

8. Dispositif de commande (3) monté sur le toit selon l'une des revendications 5 à 7, **caractérisé en ce que** la carte à circuit imprimé centrale (27) est conçue sous la forme d'une carte rigide (27) à circuit imprimé.

9. Dispositif de commande (3) monté sur le toit selon l'une des revendications 4 à 8, **caractérisé en ce que** le dispositif de commande (3) monté sur le toit comprend un élément d'entrée capacitif et/ou non capacitif (20, 21) qui est relié à la carte flexible (9) à circuit imprimé.

10. Dispositif de commande (3) monté sur le toit selon l'une des revendications 4 à 9, **caractérisé en ce que** le dispositif de commande (3) monté sur le toit comprend un dispositif d'affichage (22) qui est relié à la carte flexible (9) à circuit imprimé.

11. Système (5) pour fournir une valeur de température à une installation de climatisation (2) d'un véhicule automobile (1), le système (5) comprenant un dispositif de commande (3) monté sur le toit selon l'une des revendications 4 à 10, et l'installation de climatisation (2) du véhicule automobile (1),
**caractérisé en ce que**
le dispositif de commande (3) monté sur le toit est relié à l'installation de climatisation (2) au moyen d'un bus de véhicule (6) et est conçu pour transmettre à l'installation de climatisation (2), via le bus de véhicule (6), une valeur de température déterminée au moyen d'une unité d'évaluation (14) du dispositif (4) de mesure de température du dispositif de commande (3) monté sur le toit.
